# EUROPEAN PATENT APPLICATION

(11) **EP 4 472 155 A1**
(43) Date of publication of application: **04.12.2024**
(21) Application number: 23746154.6
(22) Date of filing: 17.01.2023
(51) Int. Cl.: H04L 41/08

(54) **NETWORK ENERGY SAVING METHOD AND APPARATUS, DEVICE, AND STORAGE MEDIUM**

(30) Priority: 28.01.2022 CN 202210109409
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); CHENG, Fang-chen, Beijing 100085 (CN); LI, Yaomin, Beijing 100085 (CN); SU, Yuwan, Beijing 100085 (CN); ZHANG, Yinghao, Beijing 100085 (CN)
(74) Representative: Studio Torta S.p.A.
(86) International application number: PCT/CN2023/072721
(87) International publication number: WO 2023/143272

(57) **Abstract**

The present disclosure provides a network energy saving method and apparatus, a device and a storage medium, which are applied to a network device. First, energy consumption indication information is acquired, which is used for indicating a target energy consumption state of the network device, and then data is transceived based on the target energy consumption state. In the embodiment of the present disclosure, an energy saving approach is configured for the network device, and then the target energy consumption state of the network device is indicated by indication information, so that the network device can determine the corresponding energy saving approach according to the target energy consumption state, thereby reducing the energy consumption of the network device. In addition, due to different energy consumption states corresponding to different energy saving approaches, the energy consumption state of the network device can be finely managed, and the energy consumption can be reduced to a greatest extent.

## Description

This application claims priority to Chinese Patent Application No. 202210109409.1, filed to the China National Intellectual Property Administration on January 28, 2022 and entitled "NETWORK ENERGY SAVING METHOD AND APPARATUS, DEVICE AND STORAGE MEDIUM", the disclosure of which is hereby incorporated by reference in its entirety.

### TECHNICAL FIELD

The present disclosure relates to the technical field of communication and, in particular to, a network energy saving method and apparatus, a device and a storage medium.

### BACKGROUND

In recent years, with the proposal of Open Radio Access Network (Open RAN), an open, intelligent, virtualized and fully interoperable network has attracted attention of major operators. However, energy consumption is a main expenditure item of the operators, and most of the energy consumption comes from the radio access network. Therefore, there is an urgent need for a network energy saving approach for this kind of network to reduce operating costs.

In the related art, there are also provided many network energy saving methods, such as a cell energy saving approach based on cell on/off, a terminal energy saving approach based on discontinuous reception (Discontinuous reception, DRX), transceiving a wake up signal (Wake up signal, WUS) and so on. However, none of these energy saving approaches can be configured to save energy for a network device such as a base station.

### SUMMARY

The present disclosure provides a network energy saving method and apparatus, a device and a storage medium, which are used for reducing energy consumption of a network device.

In a first aspect, the present disclosure provides a network energy saving method, which is applied to a network device, and the network energy saving method includes: acquiring energy consumption indication information, where the energy consumption indication information is used for indicating a target energy consumption state of the network device; transceiving data based on the target energy consumption state.

Optionally, before transceiving the data at least based on the target energy consumption state, the network energy saving method further includes: determining the target energy consumption state corresponding to the energy consumption indication information at least according to the energy consumption indication information.

Optionally, the energy consumption indication information includes a numerical value of preset information, and the determining the target energy consumption state corresponding to the energy consumption indication information at least according to the energy consumption indication information includes: acquiring the numerical value of the preset information in the energy consumption indication information; determining the target energy consumption state according to the numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; where the first value is higher than the second value, the second value is higher than the third value, energy consumption of the first energy consumption state is higher than that of the second energy consumption state, and the energy consumption of the second is higher than that of the third energy consumption state.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the energy consumption indication information includes a target energy consumption state; the determining the target energy consumption state corresponding to the energy consumption indication information at least according to the energy consumption indication information includes: acquiring the target energy consumption state in the energy consumption indication information.

Optionally, the acquiring energy consumption indication information includes at least one of the following: receiving the energy consumption indication information, where the energy consumption indication information is obtained based on preset information, and the preset information is obtained by measuring the communication system based on a first time window; and/or obtaining the preset information by measuring the communication system through the first time window, and determining the energy consumption indication information based on the preset information; where the first time window is a fixed time window or a sliding time window.

Optionally, the determining the energy consumption indication information at least based on the preset information includes: determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

Optionally, the network energy saving method further includes: converting an energy consumption state based on at least one of the following ways: converting energy consumption state based on at least one of the following way: converting a current energy consumption state of the network device into a preset energy consumption state according to preset conversion time; or acquiring conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

Optionally, the transceiving the data at least based on the target energy consumption state includes: transceiving data normally by the network device in response to the target energy consumption state being a first energy consumption state; or transceiving data by the network device during a preset second time window in response to the target energy consumption state being a second energy consumption state; or turning off the network device and/or reserving a transceiving function for a preset signal in response to the target energy consumption state being a third energy consumption state.

In a second aspect, the present disclosure provides a network energy saving method, which is applied to a terminal device, and the network energy saving method includes: acquiring preset information; determining energy consumption indication information at least based on the preset information, where the energy consumption indication information is used for indicating a target energy consumption state of a network device; transmitting the energy consumption indication information to the network device in a communication system to enable the network device to transceive data based on the target energy consumption state.

Optionally, the energy consumption indication information includes the target energy consumption state, and the determining the energy consumption indication information at least based on the preset information includes: determining the target energy consumption state based on a numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; taking the target energy consumption state as the energy consumption indication information; where the first value is higher than the second value, the second value is higher than the third value, energy consumption of the first energy consumption state is higher than that of the second energy consumption state, and the energy consumption of the second is higher than that of the third energy consumption state.

Optionally, the energy consumption indication information includes a numerical value of the preset information, and the determining the energy consumption indication information at least based on the preset information includes: taking the numerical value of the preset information as the energy consumption indication information.

Optionally, the network energy saving method further includes: determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the network energy saving method further includes transmitting conversion information to the network device, where the conversion information is used for instructing the network device to convert a current energy consumption state into an energy consumption state indicated in the conversion information.

In a third aspect, the present disclosure provides a network energy saving apparatus, which is applied to a network device, and includes: an acquiring module, configured to acquire energy consumption indication information, where the energy consumption indication information is used for indicating a target energy consumption state of the network device; a transceiver module, configured to transceive data based on the target energy consumption state.

Optionally, the network energy saving apparatus further includes a determining module, configured to determine the target energy consumption state corresponding to the energy consumption indication information at least according to the energy consumption indication information.

Optionally, the energy consumption indication information includes a numerical value of preset information, and the determining module is specifically configured to: acquire the numerical value of the preset information in the energy consumption indication information; determine the target energy consumption state according to the numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; where the first value is higher than the second value, the second value is higher than the third value, energy consumption of the first energy consumption state is higher than that of the second energy consumption state, and the energy consumption of the second is higher than that of the third energy consumption state.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the energy consumption indication information includes the target energy consumption state; the determining module is specifically configured to acquire the target energy consumption state in the energy consumption indication information.

Optionally, the acquiring module is specifically configured to acquire the energy consumption indication information based on at least one of the following ways: receiving the energy consumption indication information, where the energy consumption indication information is obtained based on preset information, and the preset information is obtained by measuring a communication system based on a first time window; and/or obtaining preset information by measuring the communication system through the first time window, and determining the energy consumption indication information based on the preset information; where the first time window is a fixed time window or a sliding time window.

Optionally, the determining module is specifically configured to determine that the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

Optionally, the network energy saving apparatus further includes a converting module, configured to convert an energy consumption state based on at least one of the following ways: converting a current energy consumption state of the network device into a preset energy consumption state according to preset conversion time; or acquiring conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

Optionally, the transceiving module is specifically configured to: transceive the data normally by the network device in response to the target energy consumption state being a first energy consumption state; or transceive data by the network device during a preset second time window in response to the target energy consumption state being a second energy consumption state; or turn off the network device and/or reserving a transceiving function for a preset signal in response to the target energy consumption state being a third energy consumption state.

In a fourth aspect, an embodiment of the present disclosure provides a network energy saving apparatus, which is applied to a terminal device, and the network energy saving apparatus includes: an acquiring module, configured to acquire preset information; a determining module, configured to determine energy consumption indication information at least based on the preset information, where the energy consumption indication information is used for indicating a target energy consumption state of a network device; a transmitting module, configured to transmit the energy consumption indication information to the network device in a communication system to enable the network device to transceive data based on the target energy consumption state.

Optionally, the energy consumption indication information includes the target energy consumption state, and the determining module is specifically configured to determine the target energy consumption state based on a numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; taking the target energy consumption state as the energy consumption indication information.

The first value is higher than the second value, the second value is higher than the third value, energy consumption of the first energy consumption state is higher than that of the second energy consumption state, and the energy consumption of the second is higher than that of the third energy consumption state.

Optionally, the energy consumption indication information includes the numerical value of the preset information, and the determining module is specifically configured to take the numerical value of the preset information as the energy consumption indication information.

Optionally, the determining module is further configured to determine that the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the transmitting module is further configured to transmit conversion information to the network device, where the conversion information is used for instructing the network device to convert a current energy consumption state into an energy consumption state indicated in the conversion information.

In a fifth aspect, an embodiment of the present disclosure provides a network device, including:
a memory, configured to store a computer program;
a transceiver, configured to transceive data under the control of a processor; where the processor is configured to read the computer program in the memory and perform the following operations: acquiring energy consumption indication information, where the energy consumption indication information is used for indicating a target energy consumption state of the network device; transceiving data at least based on the target energy consumption state.

Optionally, the processor is further configured to determine the target energy consumption state corresponding to the energy consumption indication information at least according to the energy consumption indication information.

Optionally, the energy consumption indication information includes a numerical value of preset information, and the determining the target energy consumption state corresponding to the energy consumption indication information according to the energy consumption indication information includes: acquiring the numerical value of the preset information in the energy consumption indication information; determining the target energy consumption state according to the numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value;
where the first value is higher than the second value, the second value is higher than the third value, energy consumption of the first energy consumption state is higher than that of the second energy consumption state, and the energy consumption of the second is higher than that of the third energy consumption state.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power, reference signal received quality, signal to interference plus noise ratio, received signal strength indication.

Optionally, the energy consumption indication information includes a target energy consumption state; and the determining the target energy consumption state corresponding to the energy consumption indication information at least according to the energy consumption indication information includes: acquiring the target energy consumption state in the energy consumption indication information.

Optionally, the acquiring energy consumption indication information includes at least one of the following: receiving the energy consumption indication information, where the energy consumption indication information is obtained based on preset information, and the preset information is obtained by measuring a communication system based on a first time window; and/or obtaining preset information by measuring a communication system through the first time window, and determining the energy consumption indication information based on the preset information; where the first time window is a fixed time window or a sliding time window.

Optionally, the processor is further configured for performing the following operations: determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

Optionally, the processor is further configured to perform the following operations: converting an energy consumption state based on at least one of the following ways: converting a current energy consumption state of the network device into a preset energy consumption state according to preset conversion time; or acquiring conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

Optionally, the transceiving the data at least based on the target energy consumption state includes: transceiving data normally by the network device in response to the target energy consumption state being a first energy consumption state; or transceiving data by the network device during a preset second time window in response to the target energy consumption state being a second energy consumption state; or turning off the network device and/or reserving a transceiving function for a preset signal in response to the target energy consumption state being a third energy consumption state.

In a sixth aspect, an embodiment of the present disclosure provides a terminal device, which includes: a memory, configured to store a computer program; a transceiver, configured to transceive data under the control of a processor; where the processor is configured to acquire preset information; determine energy consumption indication information at least based on the preset information, where the energy consumption indication information is used for indicating a target energy consumption state of a network device; transmitting the energy consumption indication information to the network device in a communication system to enable the network device to transceive data based on the target energy consumption state.

Optionally, the energy consumption indication information includes the target energy consumption state, and the processor is specifically configured to determine the target energy consumption state based on a numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; taking the target energy consumption state as the energy consumption indication information; where the first value is higher than the second value, the second value is higher than the third value, energy consumption of the first energy consumption state is higher than that of the second energy consumption state, and the energy consumption of the second is higher than that of the third energy consumption state.

Optionally, the energy consumption indication information includes a numerical value of the preset information, and the determining the energy consumption indication information at least based on the preset information includes: taking the numerical value of the preset information as the energy consumption indication information.

Optionally, the processor is further configured to: determine that the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the processor is further configured to transmit conversion information to the network device, where the conversion information is used for instructing the network device to convert a current energy consumption state into an energy consumption state indicated in the conversion information.

In a seventh aspect, an embodiment of the present disclosure provides a processor-readable storage medium, where a computer program is stored in the processor-readable storage medium, and the computer program is configured to cause a processor to execute the network energy saving method of the first aspect and/or the second aspect.

In an eighth aspect, an embodiment of the present disclosure provides a computer program product, where the computer program product includes a computer program which, when executed by a processor, implements the network energy saving method of the first aspect and/or the second aspect.

The present disclosure provides a network energy saving method and apparatus, a device and a storage medium, which are applied to a network device. First, energy consumption indication information is acquired, then a target energy consumption state corresponding to the energy consumption indication information is determined according to the energy consumption indication information in indication information, and data is transceived based on the target energy consumption state. In the embodiment of the present disclosure, an energy saving approach is configured for the network device, and then the target energy consumption state of the network device is indicated by indication information, so that the network device can determine the corresponding energy saving approach according to the target energy consumption state, thereby reducing the energy consumption of the network device. In addition, due to different energy consumption states corresponding to different energy saving approaches, the energy consumption state of the network device can be finely managed, and the energy consumption can be reduced to a greatest extent.

It should be understood that what is described in the above of the Summary is not intended to define key or important features of the embodiments of the present disclosure, nor is it intended to limit the scope of the present disclosure. Other features of the present disclosure will be easily understood from the following description.

### BRIEF DESCRIPTION OF DRAWINGS

In order to provide a clearer explanation of technical schemes in the present disclosure or the prior art, a brief introduction will be given to accompanying drawings required in the description of embodiments or the prior art. It is evident that the accompanying drawings in the following description are some embodiments of the present disclosure. For those of ordinary skill in the art, other accompanying drawings can be obtained based on these accompanying drawings without creative effort.
Fig. 1 is a schematic diagram of an application scenario provided by an embodiment of the present disclosure.
Fig. 2 is a schematic flow chart 1 of a network energy saving method provided by an embodiment of the present disclosure.
Fig. 3 is a schematic flow chart 2 of a network energy saving method provided by an embodiment of the present disclosure.
Fig. 4 is a schematic flow chart 3 of a network energy saving method provided by an embodiment of the present disclosure.
Fig. 5 is a schematic structural diagram 1 of a network energy saving apparatus provided by an embodiment of the present disclosure.
Fig. 6 is a schematic structural diagram 2 of a network energy saving apparatus provided by an embodiment of the present disclosure.
Fig. 7 is a schematic structural diagram of a network device provided by an embodiment of the present disclosure.
Fig. 8 is a schematic structural diagram of a terminal device provided by an embodiment of the present disclosure.

### DESCRIPTION OF EMBODIMENTS

A term "and/or" in the present disclosure describes an association relationship of associated objects, indicating that there can be three types of relationships, for example, A and/or B, which can represent the following three types of relationships: existence of A alone, existence of A and B simultaneously, and existence of B alone. The character "/" generally indicates that the associated objects are in an "or" relationship. A term "multiple" in the embodiments of the present disclosure refers to two or more, and other quantifiers are similar to it.

Technical schemes in the embodiments of the present disclosure will be described in the following clear and complete description in conjunction with the accompanying drawings of the present disclosure. Obviously, the described embodiments are only some of the embodiments of the present disclosure and not all of them. Based on the embodiments in the present disclosure, all other embodiments obtained by those of ordinary skill in the art without creative effort fall into the scope of protection of the present disclosure.

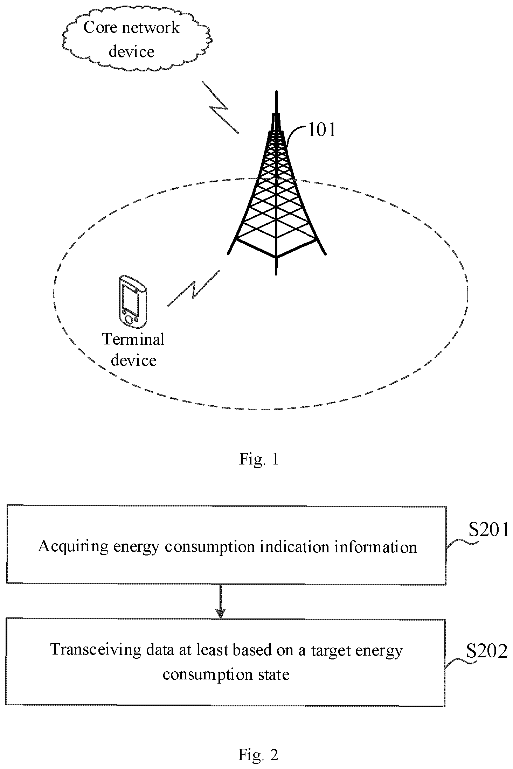

For the convenience of understanding, firstly, an application scenario of an embodiment of the present disclosure is described with reference to Fig. 1.

Fig. 1 is a schematic diagram of an application scenario provided by an embodiment of the present disclosure. As shown in Fig. 1, this scenario includes a network device 101.

In some embodiments, the network device 101 may be a base station. Specifically, it could be a base station and/or a base station controller in a global system of mobile communication (Global System of Mobile Communication, GSM) or a code division multiple access (Code Division Multiple Access, CDMA). It can also be a base station (NodeB, NB) and/or a radio network controller (Radio Network Controller, RNC) in the wideband code division multiple access (Wideband Code Division Multiple Access, WCDMA). It can further be a evolutional NodeB (evolutional NodeB, 4G base station or eNodeB) in a long term evolution (Long Term Evolution, LTE), or a relay station or an access point, or a base station in a future 5G network (5G base station), etc., which are not limited by the embodiments of the present disclosure here.

In some embodiments, the scenario may also include at least one terminal device located within the coverage of the network device 101. The terminal device can be mobile or fixed. Optionally, the "terminal device" used herein includes but is not limited to an device connected via a wired line, such as via public switched telephone networks (Public Switched Telephone Networks, PSTN), a digital subscriber line (Digital Subscriber Line, DSL), a digital cable and a direct cable; and/or via another data connection/network; and/or via a wireless interface, such as for a cellular network, a wireless local area network (Wireless Local Area Network, WLAN), a digital television network such as in a DVB-H network, a satellite network, an AM-FM broadcast transmitter; and/or an apparatus of another terminal device configured for receiving/transmitting communication signals; and/or an internet of things (Internet of Things, IoT) device.

A terminal device may refer to an access terminal, a user equipment (User Equipment, UE), a subscriber unit, a subscriber station, a mobile station, a mobile platform, a remote station, a remote terminal, a mobile device, a user terminal, a terminal, a wireless communication device, a user agent or a user apparatus. The access terminal may be a cellular phone, a cordless phone, a session initiation protocol (Session Initiation Protocol, SIP) phone, a wireless local loop (Wireless Local Loop, WLL) station, a personal digital processing (Personal Digital Assistant, PDA), a handheld device with a wireless communication function, a computing device or other processing devices connected to a wireless modem, a vehicle-mounted device, a wearable device, a terminal device in a 5G network or a terminal device in a future evolutional PLMN, etc.

This scenario also includes a core network device that communicates with the network device 101.

Optionally, the core network device may be a 5G core network device, for example, an access and mobility management function (Access and Mobility Management Function, AMF), which is responsible for access and mobility management, and has functions of user authentication, handover, location update and the like, for another example, a session management function (Session Management Function, SMF), which is responsible for session management, including establishment, modification and release of a packet data unit (packet data unit, PDU) session and the like; and for another example, an user plane function (user plane function, UPF), which is responsible for forwarding user data. Optionally, the terminal devices can perform device to device (Device to Device, D2D) communication with each other.

Fig. 1 exemplarily shows a communication scenario of one network device, one terminal device and one core network device. Optionally, the scenario may also include a plurality of network devices, and other numbers of terminal devices within the coverage of each network device, which is not limited by the embodiments of the present disclosure.

The energy consumption cost in the mobile network accounts for about 23% of the total operating cost, and most of the energy consumption comes from the radio access network, especially an active antenna unit (Active antenna unit, AAU). At present, in the 5G network, the energy consumption thereof is about 2-3 times that of the 4G network. Therefore, it is urgent to study the energy saving approach for the 5G network energy consumption.

In recent years, with the proposal of Open RAN, an open, intelligent, virtualized and fully interoperable network has attracted attention of operators. Existing network energy saving approaches are mostly regarded as a private scheme by equipment suppliers. In practical application, there are also provide a variety of network energy saving methods, such as a cell energy saving approach based on cell on/off, and a terminal energy saving approach based on discontinuous reception (Discontinuous reception, DRX), transceiving a wake up signal (Wake up signal, WUS) and so on.

LTE R12 small cell supports a cell energy saving approach based on cell on/off. Specifically, the small station achieves the purpose of energy saving by turning off some transceiving functions, but retaining the transceiving function of detecting signals. When transceiving data is needed, the cell in dormant can be quickly turned to cell on for transceiving data. However, detecting signals is not supported in NR, so that the cell energy saving mechanism based on cell on/off cannot be supported. Therefore, the cell energy saving scheme based on cell on/off needs further research and design.

In addition, the DRX energy saving approach is configured by the base station, and the terminal device only monitors the PDCCH during DRX-ON, otherwise, it does not monitor the PDCCH. Furthermore, the WUS energy saving approach can perform transmittion during DRX-off. If there is data to be transmitted during DRX-On, the terminal device will be awakened and the data will be received during DRX-On; otherwise, the terminal can continue to be in dormant, thus achieving the purpose of reducing the power consumption of the terminal.

However, up to now, there are no DRX and DTX mechanisms for a network device such as a base station in NR, therefore, the cell energy saving mechanism based on DRX/DTX cannot be supported at present, and further, the WUS mechanism cannot be supported.

In view of this, an embodiment of the present disclosure provides a network energy saving method and apparatus, a device and a storage medium, which are applied to a network device, and firstly energy consumption indication information is acquired, and then data is transmitted and received based on a target energy consumption state. In an embodiment of the present disclosure, the energy saving approach is configured for the network device, and then the target energy consumption state of the network device is indicated by the indication information, so that the network device can determine the corresponding energy saving approach according to the target energy consumption state, thereby reducing the energy consumption of the network device and solving the pain point that the power consumption of the network device cannot be reduced through adopting an energy saving technology in the prior art. In addition, due to different energy consumption states corresponding to different energy saving approaches, the energy consumption state of the network device can be finely managed, and the energy consumption can be reduced to a greatest extent.

It should be understood that the technical schemes provided by the embodiments of the present disclosure can be applied to various systems, especially the 5G system. For example, the applicable system can be a global system of mobile communication (Global System of Mobile Communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, a LTE frequency division duplex (frequency division duplex, FDD) system, a LTE time division duplex (time division duplex, TDD) system, a long term evolution advanced (long term evolution advanced, LTE-A) system, a universal mobile telecommunication system (Universal Mobile Telecommunication System, UMTS), a worldwide interoperability for microwave access (worldwide interoperability for microwave access, WiMAX) system, a 5G new radio (New Radio, NR) system, etc. These systems all include a terminal and a network device. The systems also includes a core network part, such as an evolved packet system (Evolved Packet System, EPS), the 5G system (5GS), etc.

The communication system to which the technical scheme provided by the embodiment of the present disclosure is applicable includes a network device and a terminal device, where the network device may include an access network device and a core network device, and the access network device may be a radio access network device.

It should be understood that the method and the apparatus provided by the embodiments of the present disclosure are based on the same application concept. As the principles of solving problems are similar, the implementations of the apparatus and the method can refer to each other, and the repetition will not be described.

The technical scheme of the embodiment of the present disclosure and how the technical scheme of the present disclosure solves the above technical problems will be described in detail with specific embodiments. The following specific embodiments can be combined with each other, and the same or similar concepts or processes may not be repeated in some embodiments.

Fig. 2 is a schematic flow chart 1 of a network energy saving method provided by an embodiment of the present disclosure. As shown in Fig. 2, the network energy saving method provided by the embodiment of the present disclosure includes the following steps.

S201: acquiring energy consumption indication information.

The energy consumption indication information is used for indicating a target energy consumption state of the network device.

S202: transceiving data at least based on the target energy consumption state.

It should be noted that the energy consumption indication information can be obtained by the network device or transmitted to the network device by other network element in the communication system where the network device is located, which is not specifically limited in the embodiments of the present disclosure.

In addition, in the embodiment of the present disclosure, when transceiving data, the network device can also transceive data in combination with other relevant information in addition to the target energy consumption state, and a specific type of relevant information is not specifically limited in the present disclosure.

When the energy consumption indication information is transmitted to the network device by other network element, in the one aspect, these network elements can obtain a target energy consumption state corresponding to a measurement result according to the measurement result of the preset information, and the target energy consumption state is directly indicated in the energy consumption indication information. Accordingly, when the network device receives the energy consumption indication information, the energy saving approach corresponding to the target energy consumption state is determined according to the target energy consumption state contained in the energy consumption indication information and a corresponding relationship between an energy consumption state and a preset energy saving approach.

In another aspect, a numerical value of preset information can also be transmitted to the network device as the energy consumption indication information, where the preset information includes, for example, load information of the network device, preset measurement quantity, attachment node information of the network device, etc. Accordingly, after receiving the energy consumption indication information, the network device can calculate and obtain the target energy consumption state according to the numerical value of the preset information indicated by the energy consumption indication information. As for the way in which the network device obtains the target energy consumption state according to the preset information, it is shown in the following embodiment, and will not be repeated here.

In other aspects, the energy saving approach can also be directly indicated in the energy consumption indication information. That is, after obtaining the numerical value of the preset information, these network elements can obtain the corresponding target energy consumption state according to the numerical value of the preset information, and determine the target energy consumption state according to the corresponding relationship between the energy consumption state and the energy saving approach, and the energy saving approach is directly indicated in the energy consumption indication information. Accordingly, after receiving the energy consumption indication information, the network device transceives data according to the energy saving approach indicated therein.

It should be understood that the target energy consumption state can include the following three situations: a first energy consumption state, a second energy consumption state and a third energy consumption state, where the energy consumption of the network device in the first energy consumption state is higher than that in the second energy consumption state, and the energy consumption of the network device in the second energy consumption state is higher than that in the third energy consumption state.

In a first aspect, the first energy consumption state is that an energy consumption of the network device when transceiving data normally, that is, if the target energy consumption state is a high energy consumption state, the network device transceives data normally. The transceiving data normally includes at least one of the following: transceiving data/signaling, transceiving a reference signal, etc.

Specifically, the transceiving the data/signaling includes at least one of the following: transceiving PDSCH, transceiving PUSCH, transceiving PDCCH, transceiving PUCCH, transceiving Paging, transceiving PRACH, transceiving a wake up signal, etc.

The transceiving the reference signal includes at least one of the following: transceiving CSI-RS, transceiving SRS, transceiving SSB, transceiving RMSI, transceiving RRM measurement, detecting a reference signal, positioning a reference signal, phase tracking a reference signal, time-frequency tracking a reference signal, etc.

In a second aspect, the second energy consumption state is a situation that the network device normally transceiving in some time periods, but does not perform transceiving or retains some transceiving functions in other time periods. The normal transceiving state can refer to the contents of the first aspect and will not be repeated here. As for the some transceiving functions being performed in other time periods, they may be the transceiving functions for the preset signaling and/or the preset data.

The transceiving for the preset signaling and/or the preset data includes at least one of the following: transceiving PDSCH, transceiving PUSCH, transceiving PDCCH, transceiving PUCCH, transceiving Paging, transceiving PRACH, transceiving a wake up signal, etc.

In a third aspect, the third energy consumption state is a situation that the network device is turned off at all time periods, or the transceiving functions for only some reference signals and some data/signaling are reserved. The specific contents of reference signals and data/signaling can refers to the contents of the first aspect and will not be repeated here.

In the embodiment of the present disclosure, the preset energy saving approach is configured for the network device, and then the target energy consumption state of the network device is indicated by the indication information, so that the network device can determine the corresponding energy saving approach according to the target energy consumption state, thereby reducing the energy consumption of the network device and solving the pain point that the power consumption of the network device cannot be reduced through adopting an energy saving technology in the prior art. In addition, due to different energy consumption states corresponding to different energy saving approaches, the energy consumption state of the network device can be finely managed, and the energy consumption can be reduced to a greatest extent.

In one implementation, the energy consumption indication information includes the numerical value of the preset information, and before the above step S202, it further includes the following steps: determining the target energy consumption state corresponding to the energy consumption indication information at least according to the energy consumption indication information.

Specifically, firstly, the numerical value of the preset information is acquired in the energy consumption indication information.

Further, the determining the target energy consumption state according to the numerical value of the preset information in at least one of the following ways:
determining that the target energy consumption state is a first energy consumption state in response to the numerical value of the preset information meeting a first value;
determining the target energy consumption state is a second energy consumption state in response to the numerical value of the preset information meeting a second value;
determining the target energy consumption state is a third energy consumption state in response to the numerical value of the preset information meeting a third value;
where the first value is higher than the second value, and the second value is higher than the third value.

In the embodiment of the present disclosure, the numerical value of the preset information can accurately reflect the current transceiving state of the network device, and the energy consumption state of the network device can be adjusted to the optimal energy consumption state according to the numerical value of the preset information, so as to meet the current data transceiving requirement and reduce the energy consumption of the network device.

It should be understood that in the embodiment of the present disclosure, when determining the target energy consumption state corresponding to the energy consumption indication information, other relevant information can be combined for the determination in addition to the energy consumption indication information, and the specific types of the relevant information are not limited in the present disclosure.

For example, taking the preset information as the load information, when the numerical value of the load information meets a first value, it means that the current load of the network device is heavy, and the network device needs to be adjusted to be in a higher energy consumption state, so as to transceiving data normally to meet the data transceiving requirement of these loads. However, when the numerical value of the load information meets a third value, it means that the current load of the network device is very small, and the network device can be adjusted to be in a lower energy consumption state (that is, the network device is turned off or only a small number of transceiving functions are reserved), thus reducing the energy consumption of the network device while realizing transceiving data of the current load.

In a first optional implementation, the preset information includes the load information of the communication system where the network device is located, and the load information includes at least one of the following: system resource usage rate, system resource utilization rate of the communication system.

That is, in an embodiment of the present disclosure, the energy consumption state and the load information of the communication system where the network device is located can have a one-to-one correspondence. In the embodiment of the present disclosure, the energy consumption state corresponding to the current load information can be determined as the target energy consumption state according to the correspondence between the energy consumption state and the load information.

Specifically, when the system resource usage rate meets a first system resource usage rate (i.e. a first value), and/or when the system resource utilization rate meets a first system resource utilization rate (i.e. a first value), the target energy consumption state is determined to be the first energy consumption state. When the system resource usage rate meets a second system resource usage rate (i.e. a second value), and/or when the system resource utilization rate meets a second system resource utilization rate (i.e. a second value), the target energy consumption state is determined to be the second energy consumption state. When the system resource usage rate meets a third system resource usage rate (i.e. a third value), and/or when the system resource utilization rate meets a third system resource utilization rate (i.e. a third value), the target energy consumption state is determined to be the third energy consumption state.

The resource usage rate and the resource utilization rate include but are not limited to any one of the following:
i. a downlink resource and/or an uplink resource;
ii. a physical resource and/or a logical resource;
iii. a data channel resource and/or a control channel resource;
iv. at least one of a time domain resource, a frequency domain resource, a spatial domain resource and a code domain resource.

The resource utilization rate is a proportion of a system resource transferred per unit time during a first time window in a total system resource, and the resource usage rate is a proportion of system resource transferred during the first time window in the total system resource, and the transfer refers to a transceiving process of at least one of transceiving data, transceiving signaling and transceiving a reference signal.

The first time window is a measurement window of the system resource, and a size of the first time window is not specifically limited in the embodiments of the present disclosure.

Optionally, the load information can also be a size of a buffer of the communication system and a usage rate of the buffer.

The size of the buffer and the usage rate of the buffer include at least one of the following:
i. a downlink buffer and/or an uplink buffer;
ii. at least one of a physical layer buffer, a MAC layer buffer, a RLC buffer, a PDCP buffer, a SD AP buffer, a TCP/IP buffer and a APP buffer;
iii. a buffer of a data channel and a buffer of a control channel;
iv. buffers with different service priorities;
v. at least one of a buffer of a base station, a buffer of a backhaul link, a buffer of a core network, a buffer of a transmission network and a buffer of an application layer.

The usage rate of the buffer is the usage during a second time window, and the usage rate of the buffer of the system is a proportion of the size of the transferred data/signaling/signal in the buffer of the system. The second time window is a measurement window of the buffer. A size of the second time window is not specifically limited in the embodiments of the present disclosure.

In the embodiment of the present disclosure, the preset information is the load information of the communication system where the network device is located. The essence of the embodiment of the present disclosure is to determine the energy consumption state of the network device according to the load information, therefore, the energy consumption state determined by this scheme must be able to meet the load requirement of the communication system, that is, the network energy consumption can be reduced and the load requirement of the communication system can be met by this scheme.

In a second optional implementation, the preset information may be attachment node information of the network device, and the attachment node information includes the number of attachment nodes and/or the proportion of attachment nodes.

That is, the energy consumption state can have a one-to-one correspondence with the attachment node information of the network device. In the embodiment of the present disclosure, the energy consumption state corresponding to the current attachment node information can be determined as the target energy consumption state according to the correspondence between the energy consumption state and the attachment node information.

Specifically, when the number of attachment nodes meets a first number of nodes (i.e. a first value) and/or when the proportion of attachment nodes meets a first proportion of nodes (i.e. a first value), the target energy consumption state is determined to be the first energy consumption state. When the number of attachment nodes meets a second number of nodes (i.e. a second value) and/or when the proportion of attachment nodes meets a second proportion of nodes (i.e. a second value), the target energy consumption state is determined to be the second energy consumption state. When the number of attachment nodes meets a third number of nodes (i.e. a third value) and/or when the proportion of attachment nodes meets a third proportion of nodes (i.e. a third value), the target energy consumption state is determined to be the third energy consumption state.

The attachment node includes at least one of the following: a terminal device node to which the network device provides attachment, or a node corresponding to the backhaul link, or a network device node attached under the core network.

The number of attachment nodes and the proportion of attachment nodes can be numerical values of attachment nodes in the communication system based on a third time window, and the third time window is a measurement window of attachment nodes. A size of the third time window is not specifically limited in the embodiments of the present disclosure.

In the embodiment of the present disclosure, the preset information is the attachment node information of the communication system where the network device is located. The essence of the embodiment of the present disclosure is to determine the energy consumption state of the network device according to the attachment node information, therefore, the energy consumption state determined by this scheme must be able to meet the attachment node requirement of the communication system, that is, the network energy consumption can be reduced and the attachment node requirement of the communication system can be met by this scheme.

In a third optional implementation, the preset information may be target measurement quantity, which includes at least one of the following: reference signal received power, reference signal received quality, signal to interference plus noise ratio, received signal strength indication.

That is, the energy consumption state can be in one-to-one correspondence with the target measurement quantity of the network device. In the embodiment of the present disclosure, the energy consumption state corresponding to the current target measurement quantity can be determined as the target energy consumption state according to the correspondence between the energy consumption state and the target measurement quantity.

Specifically, when the target measurement quantity meets a first measurement quantity (i.e. a first value), the target energy consumption state is determined to be the first energy consumption state. When the target measurement quantity meets a second measurement quantity (i.e. a second value), the target energy consumption state is determined to be the second energy consumption state. When the target measurement quantity meets a third measurement quantity (i.e. a third value), the target energy consumption state is determined to be the third energy consumption state.

The target measurement quantity is the numerical value within a fourth time window, and the fourth time window is a measurement window of the target measurement quantity. A size of the fourth time window is not specifically limited in the embodiments of the present disclosure.

It should be noted that the methods for determining the load information of the communication system, the attachment node information of the network device, and the target measurement quantity are shown in the following embodiments, and will not be repeated here.

In the embodiment of the present disclosure, the preset information is the target measurement quantity. The essence of the embodiment of the present disclosure is to determine the energy consumption state of the network device according to the target measurement quantity, therefore, the energy consumption state determined by this scheme must be able to meet the current target measurement quantity. That is, the network energy consumption can be reduced and the requirement of the measurement quantity can be met by this scheme.

It should be noted that when the target energy consumption states indicated by at least two preset information are different, the final target energy consumption state can be determined according to a priority.

In one aspect, the priority can be set for the above three kinds of preset information, and the final target energy consumption state can be determined according to the priority of the preset information. For example, taking the priority of the load information is higher than that of the attachment node and the priority of the attachment node is higher than that of target measurement quantity as an example, when the target energy consumption state corresponding to the load information is the second energy consumption state and the target energy consumption state corresponding to the attachment node is the first energy consumption state, due to the priority corresponding to the load information being higher than that corresponding to the attachment node, the target energy consumption state is determined to be the second energy consumption state.

In another aspect, the priority can be set for the above three energy consumption states, and the final target energy consumption state is determined according to the priority of energy consumption states. For example, taking the priority of the first energy consumption state being higher than that of the second energy consumption state and the priority of the second energy consumption state being higher than that of the third energy consumption state as an example, if the target energy consumption state corresponding to the load information is the second energy consumption state and the target energy consumption state corresponding to the attachment node is the first energy consumption state, due to the priority of the first energy consumption state being higher than that of the second energy consumption state, the target energy consumption state is determined to be the first energy consumption state.

In the embodiment of the present disclosure, the situation where the target energy consumption information obtained in various ways is disunity can be avoided by setting different priorities, so that the network device is configured with the most suitable energy consumption state and the reliability of the energy saving scheme is ensured in the present disclosure.

In addition, the priority is set according to the energy consumption state and the high energy consumption state is set as a high priority, which can meet the requirement of various functions and ensure the communication experience. For example, when there is few load in the communication systems, i.e., the relevant requirement of the load is low, which may correspond to a low energy consumption state; then if there are many attachment nodes at this moment, which may correspond to a high energy consumption state, it may be difficult to meet the relevant requirements of the attachment nodes when the data is transceived in a low energy consumption state; therefore, the high energy consumption state should be set to a high priority to enable the network device be in a high energy consumption state, so as to meet the load requirement and the relevant requirement of the attachment nodes.

In another implementation, the energy consumption indication information contains the target energy consumption state, that is, the target energy consumption state required by the network device is directly indicated in the energy consumption indication information; therefore, before the above step S202, it further includes: acquiring the target energy consumption state in the energy consumption indication information.

The target energy consumption state includes: the first energy consumption state, the second energy consumption state or the third energy consumption state, and each energy consumption state is set in the network device. After the energy consumption indication information is received, the target energy consumption state is acquired, and the data is transceived according to the target energy consumption state.

It should be noted that the energy consumption of the first energy consumption state is higher than that of the second energy consumption state, and the energy consumption of the second is higher than that of the third energy consumption state.

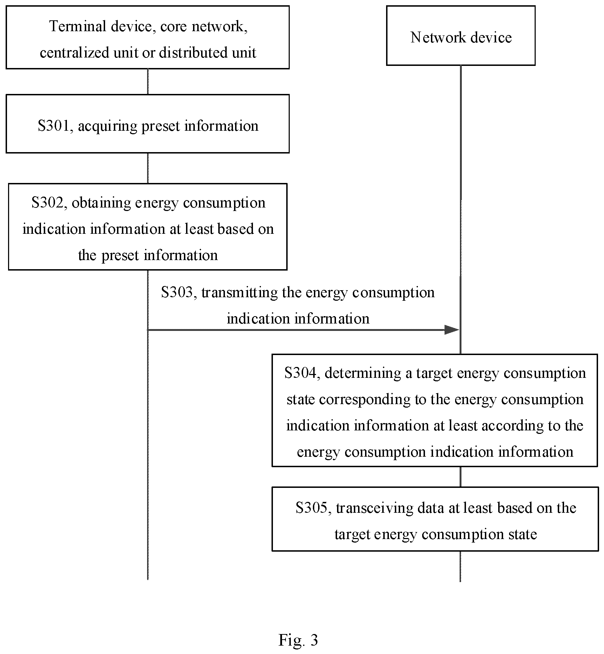

In one embodiment, the energy consumption indication information can be obtained by other network element, in the communication system where the network device is located, performing measurement on the communication system, and the mentioned other network element includes but is not limited to any one or more of the following: a terminal device, a core network, a centralized unit CU or a distributed unit DU. Combined with this embodiment, Fig. 3 is a schematic flow chart 2 of a network energy saving method provided by an embodiment of the present disclosure. As shown in Fig. 3, the network energy saving method provided by the embodiment of the present disclosure includes the following steps.

S301: acquiring, by at least one network element among a terminal device, a core network, a centralized unit or a distributed unit, preset information.

In an optional implementation, these network elements can measure the communication system where the network device is located based on the first time window, so as to acquire the preset information.

In another optional implementation, the network device can measure the communication system where it is located based on the first time window to obtain the preset information, further, the network device can transmit the preset information to these network elements, so that these network elements can acquire the preset information. S302: obtaining, by at least one network element among a terminal device, a core network, a centralized unit or a distributed unit, energy consumption indication information based on the preset information.

Specifically, the above step S302 includes at least one of the following implementations:
(1) in response to the numerical value of the preset information being greater than or equal to a first threshold value, determining that the numerical value of the preset information meets a first value;
(2) in response to the numerical value of the preset information being greater than or equal to a second threshold value, determining that the numerical value of the preset information meets a second value or the first value;
(3) in response to the numerical value of the preset information being greater than or equal to a third threshold value, determining that the numerical value of the preset information meets a third value or the second value.

In combination with the above embodiments, the numerical value of the preset information may include at least one of the following: load information of the communication system where the network device is located, attachment node information of the network device, and the numerical value corresponding to the target measurement quantity.

The load information includes: system resource usage rate, system resource utilization rate of the communication system; the attachment node information includes a number and/or proportion of attachment nodes of the network device; the target measurement quantity includes at least one of the following: reference signal received power, reference signal received quality, signal to interference plus noise ratio, received signal strength indication.

Accordingly, in the first aspect, when the preset information is the load information, the above step S302 specifically includes at least one of the following implementations:
(1) determining that the numerical value of the preset information meets a first system resource usage rate (i.e. a first value) in response to the system resource usage rate being greater than or equal to a first usage rate threshold value (i.e. a first threshold value), and/or determining that the numerical value of the preset information meets a first system resource usage rate in response to the system resource utilization rate being greater than or equal to a first utilization rate threshold value (i.e. a first threshold value);
(2) determining that the numerical value of the preset information meets a second system resource usage rate (i.e. a second value) or a first system resource usage rate in response to the numerical value of the system resource usage rate being greater than or equal to a second usage rate threshold value (i.e. a second threshold value), and/or determining that the numerical value of the preset information meets a second system resource usage rate or a first system resource usage rate in response to the system resource utilization rate being greater than or equal to a second utilization rate threshold value (i.e. a second threshold value);
(3) determining that the numerical value of the preset information meets a third system resource usage rate (i.e. a third value) or a second system resource usage rate in response to the system resource usage rate being greater than or equal to a third usage rate threshold value (i.e. a third threshold value), and/or determining that the numerical value of the preset information meets a third system resource usage rate or a second system resource usage rate in response to the system resource usage rate being greater than or equal to a third utilization rate threshold value (i.e. a third threshold value).

The first value is greater than the second value, and the second value is greater than the third value, and the first value corresponds to a normal load, and the second value corresponds to a low load, and the third value corresponds to zero load.

It should be noted that the specific values of the first threshold value, the second threshold value and the third threshold value are not limited in the embodiments of the present disclosure. For example, the first threshold value is 30%, the second threshold value is 5%, and the third threshold value is 0. During the first time window, if the system resource usage rate or utilization rate is greater than 30%, the system load indicates a normal load system; if the system resource usage rate or utilization rate is more than 5% (less than 30%), the system load can be regarded as the normal load or the low load; if the system resource usage rate or utilization rate is greater than 0 (less than 5%), the system load can be regarded as the low load or the zero load.

Accordingly, in the second aspect, when the preset information is the attachment node information of the network device, the above step S302 specifically includes at least one of the following implementations:
(1) determining that the numerical value of the preset information meets a first node number (i.e. a first value) in response to the number of attachment nodes being greater than or equal to a threshold value of the first node number (i.e. a first threshold value), and/or determining that the numerical value of the preset information meets a first node proportion (i.e. a first value) in response to the proportion of attachment nodes being greater than or equal to a first node proportion threshold value (i.e. a first threshold value);
(2) determining that the numerical value of the preset information meets a second node number (i.e., a second value) or a first node number in response to the number of attachment nodes being greater than or equal to a threshold value of the second node number (i.e., a second threshold value), and/or determining that the numerical value of the preset information meets a second node proportion (i.e., a second value) or a first node proportion in response to the proportion of attachment nodes being greater than or equal to a second node proportion threshold value (i.e., a second threshold value);
(3) determining that the numerical value of the preset information meets a third node number (i.e. the third value) or a second node number in response to the number of attachment nodes being greater than or equal to a threshold value of the third node number (i.e. a third threshold value), and/or determining that the numerical value of the preset information meets a third node proportion (i.e. a third value) or a second node proportion in response to the proportion of attachment nodes being greater than or equal to a third node proportion threshold value (i.e. a third threshold value).

Specifically, taking the preset information being the proportion of attachment nodes, and the first threshold value, the second threshold value and the third threshold value corresponding to the proportion of attachment nodes being 30%, 5% and 0 as an example, it is a normal proportion of attachment nodes if the proportion of attachment nodes is greater than 30% during the third time window; it is a low proportion of attachment nodes if the proportion of attachment nodes is more than 5% (less than 30%); it is a zero proportion of attachment nodes if the proportion of attachment nodes is greater than 0 (less than 5%).

Accordingly, in the third aspect, when the preset information is the target measurement quantity, the above step S302 specifically includes at least one of the following implementations:
(1) in response to the numerical value of the target measurement quantity being greater than or equal to a first measurement quantity threshold value (i.e., a first threshold value), determining that the numerical value of the preset information meets a first measurement quantity (i.e. a first value);
(2) in response to the numerical value of the target measurement quantity being greater than or equal to a second measurement quantity threshold value (i.e., a second threshold value), determining that the numerical value of the preset information meets a second measurement quantity (i.e., a second value) or a first measurement quantity;
(3) in response to the numerical value of the target measurement quantity being greater than or equal to a third measurement quantity threshold value (i.e., a third threshold value), determining that the numerical value of the preset information meets a third measurement quantity (i.e., a third value) or a first measurement quantity.

Specifically, taking the target measurement quantity being SINR, the first measurement quantity threshold value being 15dB, the second measurement quantity threshold value being 5dB, and the third measurement quantity threshold value being -5 dB as an example, the numerical value of the preset information meets a first measurement quantity if the proportion of 90% of the SINR obtained by the network device is greater than or equal to 15dB; the numerical value of the preset information meets a second measurement quantity when the proportion of 90% of the SINR obtained by the network device is greater than or equal to 5dB; the numerical value of the preset information meets a third measurement quantity when the proportion of 99% of the SINR obtained by the base station is less than or equal to -5dB.

S303: transmitting, by at least one network element among a terminal device, a core network, a centralized unit or a distributed unit, the energy consumption indication information to the network device.

It should be understood that in the embodiment of the present disclosure, there is no limitation on the transmitting method of the energy consumption indication information.

Specifically, in different protocol layers or interfaces, in one aspect, the energy consumption indication information can be transmitted by an explicit or implicit indication;
in another aspect, the energy consumption indication information can also be transmitted by a dynamic or static indication;
or, the energy consumption indication information can also be transmitted through AS signaling configuration, NAS signaling configuration, RAN side signaling, RRC signaling configuration, core network signaling and other ways.

S304: determining, by the network device, the target energy consumption state corresponding to the energy consumption indication information at least according to the energy consumption indication information.

In one implementation, the energy consumption indication information may be the numerical value of at least one piece of the above preset information; that is, after the numerical value of the preset information is obtained according to the preset information, the numerical value of the preset information is directly transmitted to the network device as the energy consumption indication information, and the network device determines the corresponding target energy consumption state according to the numerical value of the preset information.

It should be understood that the method for the network device to determine the target energy consumption state according to the numerical value of the preset information is similar to the scheme in the embodiment shown in Fig. 2, and will not be repeated here.

In another implementation, the energy consumption indication information can also be the target energy consumption state; that is, after obtaining the numerical value of the preset information, at least one network element among a terminal device, a core network, a centralized unit or a distributed unit determines the target energy consumption state according to the numerical value of the preset information, and transmits the target energy state as the energy consumption indication information to the network device.

Similarly, the method for these network elements to determine the target energy consumption state according to the numerical value of the preset information is similar to the scheme in the embodiment shown in Fig. 2, and will not be repeated here.

S305: transceiving, by the network device, data at least based on the target energy consumption state.

In the embodiment of the present disclosure, different energy consumption states correspond to different energy saving approaches, and step S305 specifically includes at least one of the following:
(1) in response to the target energy consumption state being a first energy consumption state, the network device normally transceives data;
(2) in response to the target energy consumption state being a second energy consumption state, the network device transceives data during a preset second time window;
(3) in response to the target energy consumption state being a third energy consumption state, the network device is turned off, and/or the preset signal transceiving function is reserved.

It should be noted that the data transceiving approach in different energy consumption states is similar to that shown in the embodiment shown in Fig. 2, and will not be repeated here.

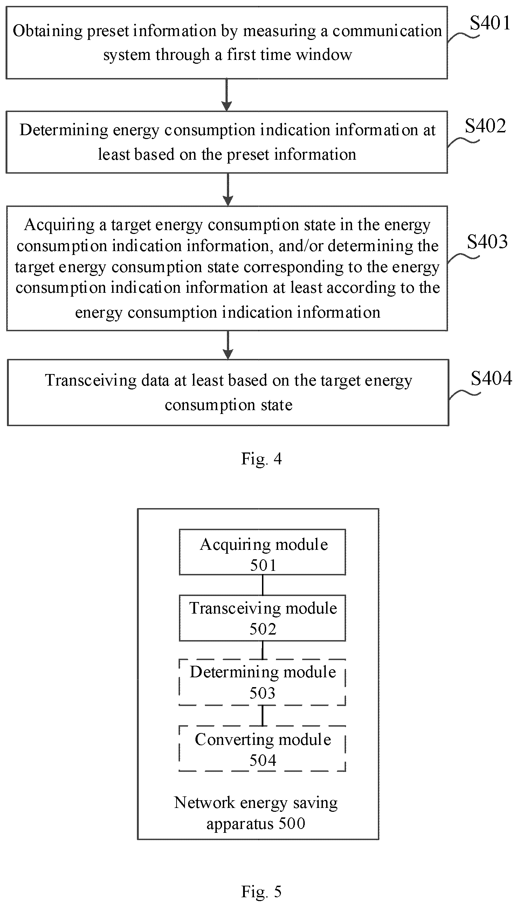

Compared with the embodiment shown in Fig. 3, in another embodiment, the energy consumption indication information can be obtained by the network device itself measuring the communication system. Combined with this embodiment, Fig. 4 is a schematic flow chart 3 of a network energy saving method provided by an embodiment of the present disclosure. It should be understood that the execution subject of the embodiment of the present disclosure is a network device.

As shown in Fig. 4, the network energy saving method provided by the embodiment of the present disclosure includes the following steps.

S401: obtaining preset information by measuring a communication system through a first time window.

The first time window is a fixed time window or a sliding time window.

S402: determining energy consumption indication information at least based on the preset information.

S403: acquiring a target energy consumption state in the energy consumption indication information, and/or determining a target energy consumption state corresponding to the energy consumption indication information at least according to the energy consumption indication information.

S404: transceiving data at least based on the target energy consumption state.

It should be noted that step S402 is similar to the implementation of step S302 in the embodiment shown in Fig. 3, and steps S403-S404 are similar to the implementation of steps S304-S305 in the embodiment shown in Fig. 3, which will not be repeated here.

In the embodiment of the present disclosure, the preset energy saving approach is configured for the network device, and then the target energy consumption state of the network device is indicated by the indication information, so that the network device can determine the corresponding energy saving approach according to the target energy consumption state, thereby reducing the energy consumption of the network device. In addition, the energy consumption state conversion based on the preset information measured by the network device itself can ensure the accuracy and timeliness of the measured data, thereby improving the reliability of the network energy saving method and reducing the energy consumption of the network device.

In some implementations, the network device can also perform energy consumption state conversion, specifically including at least one of the following:
(1) converting the current energy consumption state of the network device into a preset energy consumption state according to preset conversion time.

Specifically, a preset conversion time point or a conversion period can be set, and the energy consumption state can be converted according to the conversion time point and the conversion period.

Firstly, taking the conversion time point as an example, a plurality of conversion time points of the energy consumption state can be preset, such as a first moment, a second moment and a third moment, and a preset energy consumption state corresponding to each moment can be set at the same time, such as the first moment corresponding to the first energy consumption state, the second moment corresponding to the second energy consumption state and the third moment corresponding to the third energy consumption state.

Further, when it reaches a certain moment, the energy consumption state is converted into the corresponding energy consumption state at that moment.

Secondly, taking the conversion period as an example, a duration of the conversion period and a conversion sequence of multiple energy consumption states can be preset. For example, the conversion period is 30 minutes and the sequence of the energy consumption conversion is: the first energy consumption state, the second energy consumption state, the third energy consumption state, then the energy consumption state of the network device is converted every 30 minutes according to the above information.

The energy consumption state required by the network device is relevant to time and usually presents periodic characteristics. For example, during the daytime, the number of users is large, and the preset information of the network device (such as the system load, the attachment node, the measurement quantity) is large, therefore, the network device needs to be in a high energy consumption state to realize data transceiving of a large number of users, while at night, the number of users is relatively small, and the network device can realize data transceiving in a low energy consumption state. In the embodiment of the present disclosure, the energy consumption state is converted based on the preset conversion time, so that the energy consumption of the network device can be reduced and the normal transceiving of information can be ensured. In addition, by automatically converting the energy consumption state, the automation degree of the network device can be improved, and the energy consumption can be further reduced without real-time measurement of the preset information.

(2) acquiring conversion information, and converting the current energy consumption state of the network device into the energy consumption state indicated in the conversion information.

The conversion information can be transmitted by at least one network element among a terminal device, a core network, a centralized unit or a distributed unit.

Specifically, at least one network element among a terminal device, a core network, a centralized unit or a distributed unit will measure the preset information in real time, and when the numerical value of the preset information changes, the current required energy consumption state is determined according to the current numerical value of the preset information, and the energy consumption state is transmitted to the network device as the conversion information.

For example, taking the preset information as the target measurement quantity, if the current measurement quantity is greater than or equal to the first measurement quantity threshold value, the conversion information is used for instructing the network device to convert to be in the first energy consumption state. Similarly, if the current measurement quantity is greater than or equal to the second measurement quantity threshold value, the conversion information is used for instructing the network device to convert to be in the second energy consumption state. Similarly, if the current measurement quantity is greater than or equal to the third measurement quantity threshold value, the conversion information is used for instructing the network device to convert to be in the third energy consumption state.

In the embodiment of the present disclosure, the preset information is acquired in real time, and the energy consumption state of the network device is adjusted in real time according to the numerical value of the preset information, so that the real-time performance of the energy consumption state conversion process can be guaranteed, and the energy consumption of the network device can be further reduced.

(3) in response to the change of the numerical value of the preset information, the current energy consumption state of the network device is converted into the energy consumption state corresponding to the preset information according to the numerical value of the preset information.

Specifically, the network device will measure the numerical value of the preset information in real time, and when the numerical value of the preset information changes, the current required energy consumption state is determined according to the numerical value of the current preset information and the energy consumption state thereof is converted to the current required energy consumption state.

For example, taking the preset information being the target measurement quantity as am example, if the current measurement quantity is greater than or equal to the first measurement quantity threshold value, the network device can be converted to be in the first energy consumption state. Similarly, if the current measurement quantity is greater than or equal to the second measurement quantity threshold value, the network device can be converted to the second energy consumption state. Similarly, if the current measurement quantity is greater than or equal to the third measurement quantity threshold value, the network device can be converted to the third energy consumption state.

In the embodiment of the present disclosure, the network device acquires the preset information in real time, and adjusts the energy consumption state of the network device in real time according to the numerical value of the preset information, so that the real-time performance of the energy consumption state conversion process can be guaranteed, and the energy consumption of the network device can be further reduced; meanwhile, the situation such the indication information from other devices being delayed can be prevented and the reliability of the network energy saving mechanism can be improved through the automatic conversion of the network device.

It should be understood that although the steps in the flowchart in the above embodiment are displayed in sequence as indicated by the arrow, these steps are not necessarily executed in sequence as indicated by the arrow. Unless explicitly stated herein, the execution of these steps is not strictly limited in order, and they can be executed in other orders. Moreover, at least a part of the steps in the drawings may include a plurality of sub-steps or stages, which may not necessarily be completed at the same time, but may be executed at different times, and the execution order thereof may not necessarily be sequential, but may be executed in turns or alternately with other steps or at least a part of sub-steps or stages of other steps.

An embodiment of the present disclosure provides a network energy saving apparatus, which is applied to a network device. Fig. 5 is a schematic structural diagram of a network energy saving apparatus provided by an embodiment of the present disclosure. As shown in Fig. 5, the network energy saving apparatus 500 includes:
an acquiring module 501, configured to acquire energy consumption indication information, where the energy consumption indication information is used for indicating a target energy consumption state of a network device; a transceiving module, configured to transceive data at least based on the target energy consumption state.

Optionally, the network energy saving apparatus 500 further includes a determining module 503, configured to determine the target energy consumption state corresponding to the energy consumption indication information at least according to the energy consumption indication information.

Optionally, the energy consumption indication information includes a numerical value of preset information, and the determining module 503 is specifically configured to: acquire the numerical value of the preset information in the energy consumption indication information; determine the target energy consumption state according to the numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; where the first value is higher than the second value, the second value is higher than the third value, energy consumption of the first energy consumption state is higher than that of the second energy consumption state, and the energy consumption of the second is higher than that of the third energy consumption state.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power, reference signal received quality, signal to interference plus noise ratio, received signal strength indication.

Optionally, the energy consumption indication information includes the target energy consumption state. The determining module 503 is specifically configured to acquire the target energy consumption state in the energy consumption indication information.

Optionally, the acquiring module 501 is specifically configured to acquire the energy consumption indication information based on at least one of the following ways: receiving the energy consumption indication information, where the energy consumption indication information is obtained based on preset information, and the preset information is obtained by measuring a communication system based on a first time window; and/or obtaining preset information by measuring the communication system through the first time window, and determining the energy consumption indication information based on the preset information; where the first time window is a fixed time window or a sliding time window.

Optionally, the determining module 503 is specifically configured to determinethat the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

Optionally, the network energy saving apparatus further includes a converting module 504, configured to convert an energy consumption state based on at least one of the following ways: converting a current energy consumption state of the network device into a preset energy consumption state according to preset conversion time; or acquiring conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

Optionally, the transceiving module 502 is specifically configured to: transceive the data normally by the network device in response to the target energy consumption state being a first energy consumption state; or transceive data by the network device during a preset second time window in response to the target energy consumption state being a second energy consumption state; or turn off the network device and/or reserving a transceiving function for a preset signal in response to the target energy consumption state being a third energy consumption state.

It should be noted here that the network energy saving apparatus provided by the present disclosure can realize the corresponding steps of the methods implemented by all network devices in the above method embodiment, and can achieve the same technical effect, and the same parts and beneficial effects in the embodiment as those in the method embodiment are not repeated in detail here.

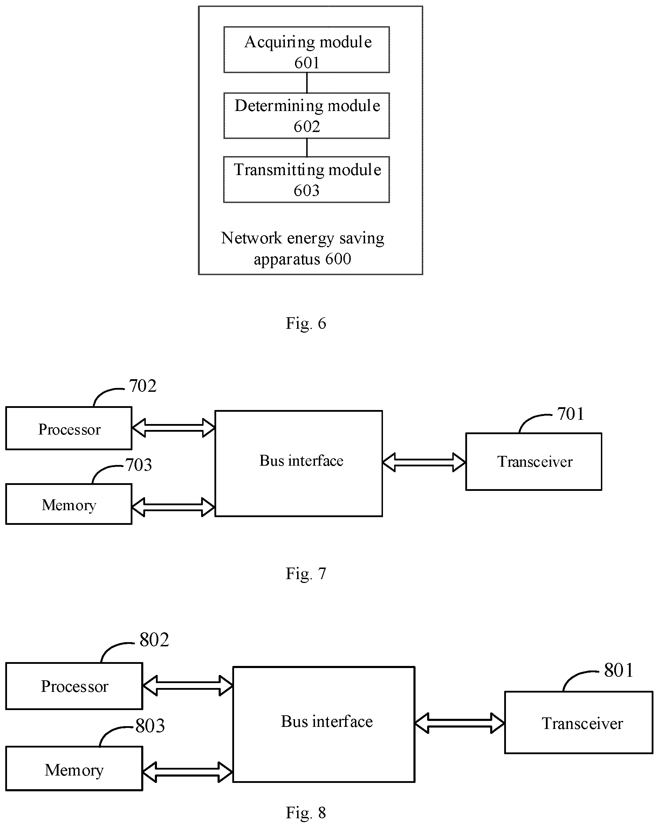

An embodiment of the present disclosure provides a network energy saving apparatus, which is applied to a terminal device. Fig. 6 is a schematic structural diagram of a network energy saving apparatus provided by an embodiment of the present disclosure. As shown in Fig. 5, the network energy saving apparatus 600 includes:
an acquiring module 601, configured to acquire preset information; a determining module 602, configured to determine energy consumption indication information at least based on the preset information, where the energy consumption indication information is used for indicating a target energy consumption state of a network device; a transmitting module 603, configured to transmit the energy consumption indication information to the network device in a communication system to enable the network device to transceive data based on the target energy consumption state.

Optionally, the determining module 602 is specifically configured to determine the target energy consumption state based on a numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; taking the target energy consumption state as the energy consumption indication information; where the first value is higher than the second value, the second value is higher than the third value, energy consumption of the first energy consumption state is higher than that of the second energy consumption state, and the energy consumption of the second is higher than that of the third energy consumption state.

Optionally, the determining module 602 is specifically configured to take the numerical value of the preset information as the energy consumption indication information.

Optionally, the determining module 602 is further configured to determine that the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the transmitting module 603 configured to transmit conversion information to the network device, where the conversion information is used for instructing the network device to convert a current energy consumption state into an energy consumption state indicated in the conversion information.

It should be noted here that the network energy saving apparatus provided by the present disclosure can realize the corresponding steps of the network energy saving method implemented by the terminal device in the above method embodiment, and can achieve the same technical effect, therefore, the same parts and beneficial effects in the embodiment as those in the method embodiment are not repeated in detail here.

Fig. 7 is a schematic structural diagram of a network device provided by an embodiment of the present disclosure. As shown in Fig. 7, the network device includes a transceiver 701, a processor 702 and a memory 703.

The transceiver 701 is configured to receive and transmit data under the control of the processor 702. In Fig. 7, the bus architecture can include any number of interconnected buses and bridges. Specifically, the interconnected buses and bridges are linked together by various circuits of one or more processors represented by the processor 702 and a memory represented by the memory 703. The bus architecture can also link various other circuits, such as a peripheral device, a voltage regulator and a power management circuit, which are well known in the art, therefore, they will not be further described herein. The bus interface provides the interface. The transceiver 701 can be a plurality of elements, that is, it includes a transmitter and a receiver, and provides a unit for communicating with various other apparatuses on transmission media, and the transmission media include a wireless channel, a wired channel, an optical cable and the like. The processor 702 is responsible for managing the bus architecture and the general processing, and the memory 703 can store data used by the processor 702 when performing operations.

The processor 702 is responsible for managing the bus architecture and the general processing, and the memory 703 can store data used by the processor 702 when performing operations.

Optionally, the processor 702 may be a central processing unit (central processing unit, CPU), an application specific integrated circuit (Application Specific Integrated Circuit, ASIC), a field programmable gate array (Field Programmable Gate Array, FPGA) or a complex programmable logic device (Complex Programmable Logic Device, CPLD), and the processor can also adopt a multi-core architecture.

The processor 702 calls a computer program stored in the memory 703 to execute any method relevant to the terminal device provided by the embodiment of the present disclosure according to the obtained executable instructions, and the processor and the memory can also be physically disposed separately.

Specifically, the processor 702 is configured to read the computer program in the memory and perform the following operations: acquiring energy consumption indication information, where the energy consumption indication information is used for indicating the target energy consumption state of the network device; transceiving data based on the target energy consumption state.

Optionally, the processor 702 is further configured to determine the target energy consumption state corresponding to the energy consumption indication information at least according to the energy consumption indication information.

Optionally, the energy consumption indication information includes a numerical value of preset information, and the determining the target energy consumption state corresponding to the energy consumption indication information according to the energy consumption indication information includes: determining the numerical value of the preset information according to the energy consumption indication information; determining the target energy consumption state according to the numerical value of the preset information in at least one of the following ways:
determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value;
where the first value is higher than the second value, the second value is higher than the third value, energy consumption of the first energy consumption state is higher than that of the second energy consumption state, and the energy consumption of the second is higher than that of the third energy consumption state.

Optionally, the preset information includes load information of a communication system where the network device is located, and the load information includes at least one of the following: system resource usage rate, system resource utilization rate of the communication system.

Optionally, the preset information includes attachment node information of the network device, and the attachment node information includes number and/or proportion of attachment nodes of the network device.

Optionally, the preset information includes target measurement quantity, and the target measurement quantity includes at least one of the following: reference signal received power, reference signal received quality, signal to interference plus noise ratio, received signal strength indication.

Optionally, the energy consumption indication information includes a target energy consumption state; the determining the target energy consumption state corresponding to the energy consumption indication information according to the energy consumption indication information includes: acquiring the target energy consumption state in the energy consumption indication information.

Optionally, the acquiring energy consumption indication information includes at least one of the following: receiving the energy consumption indication information, where the energy consumption indication information is obtained based on preset information, and the preset information is obtained by measuring the communication system based on a first time window; and/or obtaining the preset information by measuring the communication system through the first time window, and determining the energy consumption indication information based on the preset information; where the first time window is a fixed time window or a sliding time window.

Optionally, the determining the energy consumption indication information at least based on the preset information includes: determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

Optionally, the processor 702 is further configured for performing the following operations: converting an energy consumption state based on at least one of the following ways: converting a current energy consumption state of the network device into the preset energy consumption state according to preset conversion time; or acquiring the conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

Optionally, the transceiving the data at least based on the target energy consumption state includes: transceiving data normally by the network device in response to the target energy consumption state being a first energy consumption state; or transceiving data by the network device during a preset second time window in response to the target energy consumption state being a second energy consumption state; or turning off the network device and/or reserving a transceiving function for a preset signal in response to the target energy consumption state being a third energy consumption state.

It should be noted here that the network device provided by the present disclosure can realize all the corresponding method steps implemented by the network device in the above-mentioned method embodiment, and can achieve the same technical effect, therefore, the same parts and beneficial effects in the embodiment as those in the method embodiment are not repeated in detail here.

Fig. 8 is a schematic structural diagram of a terminal device provided by an embodiment of the present disclosure. As shown in Fig. 8, the terminal device includes a transceiver 801, a processor 802 and a memory 803.

The transceiver 801 is configured to receive and transmit data under the control of the processor 802.

In Fig. 8, the bus architecture can include any number of interconnected buses and bridges. Specifically, the interconnected buses and bridges are linked together by various circuits of one or more processors represented by the processor 802 and a memory represented by memory 803. The bus architecture can also link various other circuits, such as a peripheral device, a voltage regulator and a power management circuit, which are well known in the art, therefore, they will not be further described herein. The bus interface provides the interface. The transceiver 801 can be a plurality of elements, that is, it includes a transmitter and a receiver, and provides a unit for communicating with various other apparatuses on transmission media, and the transmission media include a wireless channel, a wired channel, an optical cable and the like. The processor 802 is responsible for managing the bus architecture and the general processing, and the memory 803 can store data used by the processor 802 when performing operations.

The processor 802 is responsible for managing the bus architecture and the general processing, and the memory 803 can store data used by the processor 802 when performing operations.

Optionally, the processor 802 may be a central processing unit (central processing unit, CPU), an application specific integrated circuit (Application Specific Integrated Circuit, ASIC), a field programmable gate array (Field Programmable Gate Array, FPGA) or a complex programmable logic device (Complex Programmable Logic Device, CPLD), and the processor can also adopt a multi-core architecture.

The processor 802 calls a computer program stored in the memory 803 to execute any method relevant to the terminal device provided by the embodiment of the present disclosure according to the obtained executable instructions, and the processor and the memory can also be physically disposed separately.

Specifically, the processor 802 is configured to read the computer program in the memory and perform the following operations: acquiring the preset information, and determining the energy consumption indication information at least based on the preset information, where the energy consumption indication information is used for indicating the target energy consumption state of the network device; transmitting the energy consumption indication information to the network device in the communication system, so that the network device transceives data based on the target energy consumption state.

Optionally, the energy consumption indication information includes the target energy consumption state, and the determining the energy consumption indication information at least based on the preset information includes: determining the target energy consumption state based on a numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value.

The target energy consumption state is taken as the energy consumption indication information. Where the first value is higher than the second value, the second value is higher than the third value, energy consumption of the first energy consumption state is higher than that of the second energy consumption state, and the energy consumption of the second is higher than that of the third energy consumption state. Optionally, the energy consumption indication information includes the numerical value of the preset information, and the determining energy consumption indication information based on the preset information includes: taking the numerical value of the preset information as the energy consumption indication information.

Optionally, the processor 802 is further configured to: determine that the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

Optionally, the preset information includes load information of a communication system where the network device is located, and the load information includes at least one of the following: system resource usage rate, system resource utilization rate of the communication system.

Optionally, the preset information includes attachment node information of a network device, and the attachment node information includes number and/or proportion of attachment nodes of the network device.

Optionally, the preset information includes target measurement quantity, and the target measurement quantity includes at least one of the following: reference signal received power RSRP, reference signal received quality RSRQ, signal to interference plus noise ratio SINR, received signal strength indication RSSI.

Optionally, the processor 802 is further configured to transmit the conversion information to the network device, and the conversion information is used for instructing the network device to convert a current energy consumption state into an energy consumption state indicated in the conversion information.

It should be noted here that the terminal device provided by the present disclosure can realize all the corresponding method steps implemented by the terminal device in the above method embodiment, and can achieve the same technical effect, therefore, the same parts and beneficial effects in the embodiment as those in the method embodiment are not repeated in detail here.

It should be noted that the division of units in the embodiments of the present disclosure is schematic, only a logical function division, and there may be another division method in a practical implementation. In addition, each functional unit in each embodiment of the present disclosure can be integrated into one processing unit, or each unit can exist physically alone, or two or more units can be integrated into one unit. The above integrated units can be implemented in the form of hardware or software functional units.

If the above integrated units are implemented in the form of software functional units and sold or used as independent products, they can be stored in a processor-readable storage medium. Based on this understanding, the technical solution of the present disclosure in essence or the part that contributes to the prior art or the whole or part of the technical solution of the present disclosure can be implemented in the form of a software product, which is stored in a storage medium and include several instructions to make a computer device (which can be a personal computer, a server, a network device, etc.) or a processor (processor) execute all or part of the steps of the methods of various embodiments of the present disclosure. The aforementioned storage medium include: a U disk, a mobile hard disk, a read-only memory (Read-Only Memory, ROM), a random access memory (Random Access Memory RAM), a magnetic disk or an optical disk and other media that can store program codes.

An embodiment of the present disclosure provides a processor-readable storage medium, and the processor-readable storage medium stores a computer program, and the computer program is configured to enable the processor to execute the network energy saving method provided by the embodiments of the present disclosure, so that the processor can realize all the steps of the network energy saving method implemented by the network device in the above method embodiment, and can achieve the same technical effect, and the same parts and beneficial effects in the embodiment as those in the method embodiment are not repeated in detail here. The processor-readable storage medium can be any available medium or data storage device that the processor can access, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, a EPROM, a EEPROM, a non-volatile memory (NAND FLASH), a solid state disk (SSD), etc.

An embodiment of the present disclosure also provides a computer program product containing instructions. A computer program is stored in a storage medium, and at least one processor can read the computer program from the storage medium. When the computer program is executed by the at least one processor, all the steps of the network energy saving method implemented by the network device in the above method embodiment can be implemented, and the same technical effect can be achieved. Therefore, the same parts and beneficial effects in the embodiment as those in the method embodiment are not repeated in detail here.

An embodiment of the present disclosure also provides a communication system, which includes a network device and any one or more of the following: a terminal device, a core network, a centralized unit CU or distributed unit DU. The network device can execute all steps of the network energy saving method of the embodiment, and can achieve the same technical effect. The same parts and beneficial effects in the embodiment as those in the method embodiment are not repeated in detail here.

It should be understood by those skilled in the art that the embodiments of the present disclosure can be provided as a method, a system, or a computer program product, and therefore, the present disclosure can take the form of an entirely hardware embodiment, an entirely software embodiment, or the embodiment combining software and hardware aspects. Moreover, the present disclosure can take the form of a computer program product implemented on one or more computer-usable storage medium (including but not limited to a magnetic disk memory and an optical memory) containing computer-usable program codes therein.

The present disclosure is described with reference to the signaling interaction schematic and/or block diagram of the method, apparatus and computer program product according to the embodiments of the present disclosure. It should be understood that each flow and/or block in the signaling interaction diagram and/or block diagram, and the combination of the flow and/or block in the signaling interaction diagram and/or block diagram can be implemented by the computer-executable instruction. The computer-executable instruction may be provided to a general-purpose computer, a special-purpose computer, an embedded processor or a processor of other programmable data processing device to produce a machine, such that an apparatus for implementing the function specified in the one or more flows of the signaling interaction schematic diagram and/or one or more blocks of the block diagram is produced by the computer or the processor of other programmable data processing device when executing the instruction. The processor-executable instructions may also be stored in a processor-readable memory that can direct a computer or other programmable data processing device to operate in a specific manner, such that the instruction stored in the processor-readable memory produces an article of manufacture including an instruction apparatus, which implements the function specified in the one or more flows of the signaling interaction schematic diagram and/or one or more blocks of the block diagram.

The processor-executable instructions can also be loaded onto a computer or other programmable data processing devices, so that a series of operational steps are performed on the computer or other programmable devices to produce computer-implemented processes, so that the instruction executed on the computer or other programmable devices provides steps for implementing the function specified in the one or more flows of the signaling interaction schematic diagram and/or one or more blocks of the block diagram.

Obviously, various modifications and variations can be made to the present disclosure by those skilled in the art without departing from the spirit and scope of the present disclosure. Thus, if these modifications and variations of the present disclosure are within the scope of the claims of the present disclosure and their technical equivalents, the present disclosure is also intended to cover these modifications and variations.

## Claims

1. A network energy saving method, **characterized in that** the network energy saving method is applied to a network device and comprises: acquiring energy consumption indication information, wherein the energy consumption indication information is used for indicating a target energy consumption state of the network device; transceiving data at least based on the target energy consumption state.

2. The network energy saving method according to claim 1, wherein before transceiving the data at least based on the target energy consumption state, the network energy saving method further comprises: determining the target energy consumption state corresponding to the energy consumption indication information at least according to the energy consumption indication information.

3. The network energy saving method according to claim 2, wherein the energy consumption indication information comprises a numerical value of preset information, and the determining the target energy consumption state corresponding to the energy consumption indication information at least according to the energy consumption indication information comprises:
acquiring the numerical value of the preset information in the energy consumption indication information;
determining the target energy consumption state according to the numerical value of the preset information in at least one of the following ways:
determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value; wherein the first value is higher than the second value, the second value is higher than the third value, energy consumption of the first energy consumption state is higher than energy consumption of the second energy consumption state, and the energy consumption of the second is higher than energy consumption of the third energy consumption state.

4. The network energy saving method according to claim 3, wherein the preset information comprises load information of a communication system where the network device is located, and the load information comprises at least one of the following: system resource usage rate, system resource utilization rate of the communication system.

5. The network energy saving method according to claim 3, wherein the preset information comprises attachment node information of the network device, and the attachment node information comprises number and/or proportion of attachment nodes of the network device.

6. The network energy saving method according to claim 3, wherein the preset information comprises target measurement quantity, and the target measurement quantity comprises at least one of the following: reference signal received power RSRP, reference signal received quality RSRQ, signal to interference plus noise ratio SINR, received signal strength indication RSSI.

7. The network energy saving method according to claim 2, wherein the energy consumption indication information comprises a target energy consumption state; the determining the target energy consumption state corresponding to the energy consumption indication information at least according to the energy consumption indication information comprises: acquiring the target energy consumption state in the energy consumption indication information.

8. The network energy saving method according to any one of claims 1-7, wherein the acquiring energy consumption indication information comprises at least one of the following:
receiving the energy consumption indication information, wherein the energy consumption indication information is obtained based on a numerical value of preset information, and the numerical value of the preset information is obtained by measuring the communication system based on a first time window; and/or obtaining the numerical value of the preset information by measuring the communication system through the first time window, and determining the energy consumption indication information based on the numerical value of the preset information; wherein the first time window is a fixed time window or a sliding time window.

9. The network energy saving method according to claim 8, wherein the network energy saving method further comprises:
determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

10. The network energy saving method according to any one of claims 1-7, wherein the network energy saving method further comprises:
converting an energy consumption state based on at least one of the following ways: converting a current energy consumption state of the network device into a preset energy consumption state according to preset conversion time; or acquiring conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

11. The network energy saving method according to any one of claims 1-7, wherein the transceiving the data at least based on the target energy consumption state comprises: transceiving data normally by the network device in response to the target energy consumption state being a first energy consumption state; or transceiving data by the network device during a preset second time window in response to the target energy consumption state being a second energy consumption state; or turning off the network device and/or reserving a transceiving function for a preset signal in response to the target energy consumption state being a third energy consumption state.

12. A network energy saving method, **characterized in that** the network energy saving method is applied to a terminal device and comprises:
acquiring preset information; determining energy consumption indication information at least based on the preset information, wherein the energy consumption indication information is used for indicating a target energy consumption state of the network device; transmitting the energy consumption indication information to the network device in the communication system to enable the network device to transceive data based on the target energy consumption state.

13. The network energy saving method according to claim 12, wherein the energy consumption indication information comprises the target energy consumption state, and the determining the energy consumption indication information at least based on the preset information comprises:
determining the target energy consumption state based on a numerical value of the preset information in at least one of the following ways:
determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value;
taking the target energy consumption state as the energy consumption indication information; wherein the first value is higher than the second value, the second value is higher than the third value, energy consumption of the first energy consumption state is higher than energy consumption of the second energy consumption state, and the energy consumption of the second is higher than energy consumption of the third energy consumption state.

14. The network energy saving method according to claim 12, wherein the energy consumption indication information comprises a numerical value of the preset information, and the determining the energy consumption indication information at least based on the preset information comprises: taking the numerical value of the preset information as the energy consumption indication information.

15. The network energy saving method according to claim 13, wherein the network energy saving method further comprises: determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

16. The network energy saving method according to claim 12, wherein the preset information comprises load information of a communication system where the network device is located, and the load information comprises at least one of the following: system resource usage rate, system resource utilization rate of the communication system.

17. The network energy saving method according to claim 12, wherein the preset information comprises attachment node information of the network device, and the attachment node information comprises number and/or proportion of attachment nodes of the network device.

18. The network energy saving method according to claim 12, wherein the preset information comprises target measurement quantity, and the target measurement quantity comprises at least one of the following: reference signal received power RSRP, reference signal received quality RSRQ, signal to interference plus noise ratio SINR, received signal strength indication RSSI.

19. The network energy saving method according to any one of claims 12-18, wherein the network energy saving method further comprises transmitting conversion information to the network device, wherein the conversion information is used for instructing the network device to convert a current energy consumption state into an energy consumption state indicated in the conversion information.

20. A network energy saving apparatus, **characterized in that** the network energy saving apparatus is applied to a network device and comprises:
an acquiring module, configured to acquire energy consumption indication information, wherein the energy consumption indication information is used for indicating a target energy consumption state of the network device;
a transceiving module, configured to transceive data at least based on the target energy consumption state.

21. A network energy saving apparatus, **characterized in that** the network energy saving apparatus is applied to a terminal device and comprises:
an acquiring module, configured to acquire preset information;
a determining module, configured to determine energy consumption indication information at least based on the preset information, wherein the energy consumption indication information is used for indicating a target energy consumption state of a network device;
a transmitting module, configured to transmit the energy consumption indication information to the network device in the communication system to enable the network device to transceive data based on the target energy consumption state.

22. A network device, **characterized in that** the network device comprises:
a memory, configured to store a computer program;
a transceiver, configured to transceive data under the control of a processor;
wherein the processor is configured to read the computer program in the memory and perform the following operations: acquiring energy consumption indication information, wherein the energy consumption indication information is used for indicating a target energy consumption state of the network device; transceiving data at least based on the target energy consumption state.

23. The network device according to claim 22, wherein before transceiving the data based on the target energy consumption state, the processor is further configured to determine the target energy consumption state corresponding to the energy consumption indication information at least according to the energy consumption indication information.

24. The network device according to claim 23, wherein the energy consumption indication information comprises a numerical value of preset information, and the determining the target energy consumption state corresponding to the energy consumption indication information at least according to the energy consumption indication information comprises:
acquiring the numerical value of the preset information in the energy consumption indication information; determining the target energy consumption state according to the numerical value of the preset information in at least one of the following ways: determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value;
wherein the first value is higher than the second value, the second value is higher than the third value, energy consumption of the first energy consumption state is higher than energy consumption of the second energy consumption state, and the energy consumption of the second is higher than energy consumption of the third energy consumption state.

25. The network device according to claim 24, wherein the preset information comprises load information of a communication system where the network device is located, and the load information comprises at least one of the following: system resource usage rate, system resource utilization rate of the communication system.

26. The network device according to claim 24, wherein the preset information comprises attachment node information of the network device, and the attachment node information comprises number and/or proportion of attachment nodes of the network device.

27. The network energy saving method according to claim 24, wherein the preset information comprises target measurement quantity, and the target measurement quantity comprises at least one of the following: reference signal received power RSRP, reference signal received quality RSRQ, signal to interference plus noise ratio SINR, received signal strength indication RSSI.

28. The network device according to claim 23, wherein the energy consumption indication information comprises a target energy consumption state; and the determining the target energy consumption state corresponding to the energy consumption indication information at least according to the energy consumption indication information comprises: acquiring the target energy consumption state in the energy consumption indication information.

29. The network device according to any one of claims 22-28, wherein the acquiring energy consumption indication information comprises at least one of the following: receiving the energy consumption indication information, wherein the energy consumption indication information is obtained based on preset information, and the preset information is obtained by measuring the communication system based on a first time window; and/or obtaining the preset information by measuring the communication system through the first time window, and determining the energy consumption indication information based on the preset information; wherein the first time window is a fixed time window or a sliding time window.

30. The network device according to claim 29, wherein the network device further comprises: determining that the numerical value of the preset information meets a first value in response to the numerical value of the preset information being greater than or equal to a first threshold value; or determining that the numerical value of the preset information meets a second value or a first value in response to the numerical value of the preset information being greater than or equal to a second threshold value; or determining that the numerical value of the preset information meets a third value or a second value in response to the numerical value of the preset information being greater than or equal to a third threshold value.

31. The network device according to any one of claims 22-28, wherein the processor is further configured for performing the following operations:
converting an energy consumption state based on at least one of the following ways: converting a current energy consumption state of the network device into a preset energy consumption state according to preset conversion time; or acquiring conversion information to convert the current energy consumption state of the network device into an energy consumption state indicated in the conversion information; or in response to the change of a numerical value of the preset information, converting the current energy consumption state of the network device into an energy consumption state corresponding to the preset information according to the numerical value of the preset information.

32. The network device according to any one of claims 22-28, wherein the transceiving the data at least based on the target energy consumption state comprises: transceiving data normally by the network device in response to the target energy consumption state being a first energy consumption state; or transceiving data by the network device during a preset second time window in response to the target energy consumption state being a second energy consumption state; or turning off the network device and/or reserving a transceiving function for a preset signal in response to the target energy consumption state being a third energy consumption state.

33. A terminal device, **characterized in that** the terminal device comprises:
a memory, configured to store a computer program;
a transceiver, configured to transceive data under the control of a processor;
wherein the processor is configured to acquire preset information; determine energy consumption indication information at least based on the preset information, wherein the energy consumption indication information is used for indicating a target energy consumption state of a network device; transmit the energy consumption indication information to the network device in the communication system to enable the network device to transceive data based on the target energy consumption state.

34. The terminal device according to claim 33, wherein the energy consumption indication information comprises the target energy consumption state, and the determining the energy consumption indication information at least based on the preset information comprises:
determining the target energy consumption state based on a numerical value of the preset information in at least one of the following ways:
determining that the target energy consumption state is a first energy consumption state in response to the numerical value of the preset information meeting a first value; or determining that the target energy consumption state is a second energy consumption state in response to the numerical value of the preset information meeting a second value; or determining that the target energy consumption state is a third energy consumption state in response to the numerical value of the preset information meeting a third value;
taking the target energy consumption state as the energy consumption indication information;
wherein the first value is higher than the second value, the second value is higher than the third value, energy consumption of the first energy consumption state is higher than energy consumption of the second energy consumption state, and the energy consumption of the second is higher than energy consumption of the third energy consumption state.

35. The terminal device according to claim 33, wherein the energy consumption indication information comprises a numerical value of the preset information, and the determining the energy consumption indication information at least based on the preset information comprises: taking the numerical value of the preset information as the energy consumption indication information.

36. The terminal device according to claim 34, wherein the processor is further configured to: determine that the numerical value of the preset information meets a first value in response to the numerical value of the preset information being greater than or equal to a first threshold value; or determine that the numerical value of the preset information meets a second value or a first value in response to the numerical value of the preset information being greater than or equal to a second threshold value; or determine that the numerical value of the preset information meets a third value or a second value in response to the numerical value of the preset information being greater than or equal to a third threshold value.

37. The terminal device according to claim 33, wherein the preset information comprises load information of a communication system where the network device is located, and the load information comprises at least one of the following: system resource usage rate, system resource utilization rate of the communication system.

38. The terminal device according to claim 33, wherein the preset information comprises attachment node information of the network device, and the attachment node information comprises number and/or proportion of attachment nodes of the network device.

39. The terminal device according to claim 33, wherein the preset information comprises target measurement quantity, and the target measurement quantity comprises at least one of the following: reference signal received power RSRP, reference signal received quality RSRQ, signal to interference plus noise ratio SINR, received signal strength indication RSSI.

40. The terminal device according to any one of claims 33-39, wherein the processor is further configured to transmit conversion information to the network device, wherein the conversion information is used for instructing the network device to convert a current energy consumption state to an energy consumption state indicated in the conversion information.

41. A processor-readable storage medium, **characterized in that** a computer program is stored in the processor-readable storage medium, and the computer program is configured to cause a processor to execute the network energy saving method according to any one of claims 1-19.

42. A computer program product, **characterized in that** the computer program product comprises: a computer program which, when executed by a processor, implements the network energy saving method according to any one of claims 1-19.
